# EUROPEAN PATENT APPLICATION

(11) **EP 1 145 825 A2**
(43) Date of publication of application: **17.10.2001**
(21) Application number: 01303437.6
(22) Date of filing: 12.04.2001
(51) Int. Cl.: B29C 65/02, G05B 19/4093, B29C 65/34

(54) **Improvements in and relating to welding and fusion operations**

(30) Priority: 13.04.2000 GB 0009041
(71) Applicant: Glynwed Pipe Systems Limited, Coleshill, Birmingham B46 3BP (GB)
(72) Inventor: Wilkinson, Kevin, c/o Durapipe S & LP, Dewsbury WF12 9DB (GB)
(74) Representative: Pawlyn, Anthony Neil

(57) **Abstract**

The invention provides apparatus and method of joining a first component to a second component, the method comprising the acts of selecting a first component to join to a second component, arranging the first and second component in contact with one another, connecting the first component to a power supply, applying the power supply according to a power supply profile to the first component to resistance heat at least the first component and allowing the first component to cool joined to the second component, and wherein a listing of a plurality of first component types is provided with one or more stored resistance values for each first component type, the resistance of at least a part of the selected first component being measured to obtain a measured resistance value, the measured resistance value being compared with the stored resistance values for at least some of the plurality of first component types, the comparison resulting in the selection of one or more types of first component as possible identities for the actual first component when a given degree of correspondence between the measured resistance value and a stored resistance value occurs, the possible identities being indicated and one of those identities being selected, the selection resulting in the application of the power supply profile associated with that identity for the first component.

In this way the accurate control of the operation is improved and the capacity for use error is reduced.

## Description

This invention concerns improvements in and relating to welding and/or fusion operations, particularly, but not exclusively, in relation to electrofusion operations for pipes and other conduits.

Electrofusion, for example, is often used to connect lengths of plastics pipe together and/or to join components or fittings, such as reducers, to pipes. The operation basically passes a current through a fitting to generate heat by resistance heating and so partially melt the plastics forming the fitting. Upon cooling a joint is formed. Pipeline systems using this process are commonly found in the utility industries. Wherever they are used it is important that the joint is formed correctly to give proper and long lasting operation.

Correct operating must be achieved by operators in the field, potentially using different power applying units, different pipes and different fittings from one location to the next. Furthermore, even the same fitting type can be produced by a series of manufacturers and hence differ in the electrofusion conditions need to form a correct joint.

The present invention has amongst its aims the simplification of such processes and measures to ensure correct operating parameters are used.

According to a first aspect of the invention we provide a method of joining a first component to a second component, the method comprising the acts of selecting a first component to join to a second component, arranging the first and second component in contact with one another, connecting the first component to a power supply, applying the power supply according to a power supply profile to the first component to resistance heat at least the first component and allowing the first component to cool joined to the second component, and wherein a listing of a plurality of first component types is provided with one or more stored resistance values for each first component type, the resistance of at least a part of the selected first component being measured to obtain a measured resistance value, the measured resistance value being compared with the stored resistance values for at least some of the plurality of first component types, the comparison resulting in the selection of one or more types of first component as possible identities for the actual first component when a given degree of correspondence between the measured resistance value and a stored resistance value occurs, the possible identities being indicated and one of those identities being selected, the selection resulting in the application of the power supply profile associated with that identity for the first component.

The first component may be selected from one or more categories of first component. The categories may include couplers, reducers, tees, tapping tees, elbows, saddles or other. One or more of the categories may include two or more different size first components. One or more of the categories may include one or more first components of different manufacture. Each different manufacture and/or size and/or category of first component may be considered as a different type of first component.

The second component may be a pipe or other conduit. Different size and/or diameter second components may be provided. The second component may be formed of one or more pipe or other conduit length.

The first component is preferably selected according to the function to be achieved by it in combination with the second component. The first component may attach one length of pipe or conduit to another. The first component may attach one length of pipe or conduit to another length of different size and/or diameter. The first component may provide a pipe or conduit or mounting therefore at an angle to the second component. The first component may provide a pipe or conduit which can be made integral with the second component pipe or conduit after joining. The first component may change the angle of one second component relative to another second component. The first component may be mounted on the second component to provide a pipe or conduit or mounting therefore

The first component may be placed on the second component. The first component may be placed around at least a part of the second component.

The first component may be provided with one or more electrical connection locations. The electrical connection locations preferably allow an electrical connection between the resistor or resistors placed in the first component and the power supply, ideally through electrical leads.

The power supply preferably applies power to the first component according to a power supply profile. A plurality of predefined power supply profiles may be provided. Preferably each first component type has an associated power supply profile. Some first component types may have different power supply profiles associated with them to other first component types and/or may have equivalent power supply profiles to other first component types. A power supply profile may specify application of a given voltage and /or voltage profile with time and/or a given current and/or current profile with time and/or a given power supply duration.

The first component and second component may be joined by at least partially melting at least a part of the first component, the partially melted part of the first component contacting the second component and solidifying and/or cooling in contact therewith. At least partial melting of a part of the second component may be provided.

The listing of a plurality of first component types may be provided as a database. The listing may be provided by the power supply or control unit therefore. The listing may be provided by computer software and ideally is up-dateable. The listing for a first component type may provide a single stored resistance value, a plurality of stored resistance values or a range of stored resistance values. Such listings are preferably provided for each first component type.

The measured resistance value of the selected first component may be obtained by passing a current, ideally a constant current, through the first component and measuring the voltage drop across the first component. The measured resistance value is preferably the resistance of the electrical conductors which pass through the first component.

The comparison of the measured resistance value with the stored resistance values may involve a determination as to whether the measured resistance value is within a given deviation from the stored resistance value or values or range of values. A measured resistance value within the deviation of the stored value or value or range of values may be selected. More preferably the comparison of the measured resistance value with the stored resistance values may involve a determination as to whether the measured resistance value corresponds directly with a given stored resistance value or values or range of values. A measured resistance value which corresponds with the stored value or value or range of values may be selected.

The comparison may be made with the stored resistance values for all first component types, but is more preferably made with respect to all first component types within a given category of first components.

The possible identities are preferably displayed, for instance by a visible indication on a display unit.

The selection of the identity may be made automatically, but is preferably made by an operator.

Preferably a selection results in the power supply applying a given voltage and/or voltage profile and/or given current and/or current profile and/or given duration of power application to the first component to affect the joining, ideally without requiring further information or input.

The invention may still further provide from amongst the following possibilities.

The method may request one or more inputs or selections of the operator or operators. The method may request the input of the first component's category or offer a selection of possible categories from which the operator or'operators can select. The method may request the input of the first component's material of manufacture or offer a selection of possible materials from which the operator or operators can select. The method may request the input of the first component's manufacturer or offer a selection of possible manufacturers from which the operator or operators can select. The inputs or selections may be sought in any order, but the order first component category, first component material, with first component manufacturer as an option as the preferred order. The method may include offering the operator or operators the choice of a manually process in which the power supply profile is inputted or selected by the operator or operators or an automatic process according to the method set out for the invention. Preferably the manual or automatic choice precedes the category and/or material and/or manufacturer choice process.

The inputs or selections may be sought before or after the resistance of the first component is measured to give the measured resistance value, but are preferably conducted before. The measured resistance value may be determined before or after the first component is placed in contact with the second, but is preferably carried out after.

The indicated possible identities may include identities which have stored resistance value or values or range of values which corresponds directly with the measured resistance value and/or for which the measured resistance value is within a given deviation of the stored value or values or range of values.

Preferably where one or more possible identities with directly corresponding stored resistance value or values or range of values are found by the comparison they are each indicated, and ideally no possible identities for which the measured resistance value is within the given deviation of the possible identity's stored resistance value or values or range of values are indicated.

Where no possible identities with directly corresponding stored resistance value or values or range of values are found by the comparison then it is preferred that the possible identities for which the measured resistance value is within the given deviation of the possible identity's stored resistance value or values or range of values are indicated. Ideally in such case the possible identities are indicated in order according to the relative proximity of the measured resistance value to their respective stored resistance value or values or range of values. Descending order for such an indication is preferred. The indication may include an indication of the difference between the measured resistance value and the stored resistance value or values or range of values.

Where no possible identities arise from the comparison the operator or operators may be given the choice of repeating the method. Where no possible identities arise from the comparison the operator or operators may be given the choice of viewing an indication of the closest stored resistance value or values or range of values to the measured resistance, the indication may further include an indication of the difference between the measured resistance value and the stored resistance value or values or range of values.

The listing of first component types and associated stored resistance value or values or range of values may be automatically updated as the method is repeated for different first components. The updating may vary the stored resistance value or values or range of values deemed to designate a first component type, for instance as one or more measured resistance values are selected as equating to that particular first component type.

According to a second aspect of the invention we provide apparatus for joining a first component to a second component, the apparatus comprising a power supply which is electrically connected to a selected first component in contact with a second component, the power supply applying power according to a power supply profile to the first component to resistance heat at least the first component and allowing the first component to cool joined to the second component, the power profile being defined by a control unit for the power supply and wherein the apparatus includes a listing of a plurality of first component types with one or more stored resistance values for each first component type, a resistance measurer for at least a part of the selected first component to obtain a measured resistance value, a comparator for the measured resistance value with the stored resistance values for at least some of the plurality of first component types, the comparator output resulting in the selection of one or more types of first component as possible identities for the actual first component when a given degree of correspondence between the measured resistance value and a stored resistance value occurs, an indicator for indicating the possible identities and a user operated selector to select one of those identities, the selection being conveyed to the control unit and resulting in the application of the power supply profile associated with that identity for the first component.

The second aspect of the invention may include any of the features, options or possibilities set out elsewhere in this document including the first aspect of the invention.

Various embodiments of the invention will now be described, by way of example only, and with reference to the accompanying drawings in which :-
Figure 1 illustrates schematically a section of pipeline formed by a series of electrofusion welding operations and illustrates some of the potential fitting types; and
Figure 2 illustrates schematically a potential sequence for the operation of the present invention.

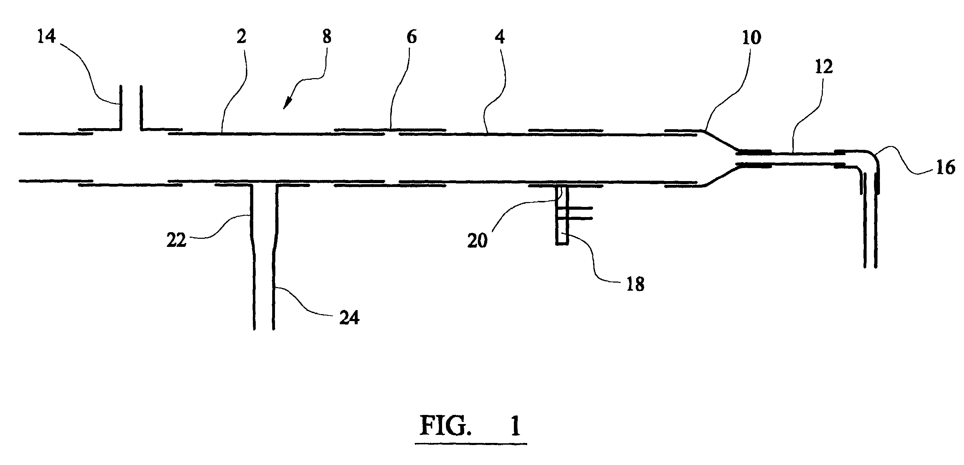

As shown in Figure 1 two sections of plastics pipe 2, 4, can be joined together by a collar 6 to give a fluid tight pipeline 8. The collar 6 effects the join by being resistance heated by an electrofusion welding unit which passes a current through it, the current giving partial melting of the collar 6 and potentially the ends of the pipes 2, 4. Upon cooling the seal is formed.

As well as collars 6 electrofusion operations can be used to effect a number of joint types and introduce a number of different fitting types to a pipeline 8. Figure 1, illustrates by way of non-exhaustive example, a reducer 10 for linking pipe 4 to a smaller diameter pipe 12; a tee 14 for splitting the pipe 2 to give a potential side spur; an elbow 16 to turn the pipeline direction through 90° or other angles; a tapping tee 18 which allows the pipeline wall 20 to be breached after attachment; and a branching saddle 22 which attaches a smaller diameter pipe 24 to the pipe 4.

Due to the different sizes and diameters of the fittings, the different amounts of plastics which have to be heated and the different materials from which the fittings can be made, no one set of conditions is sufficient to effectively form a join between all the different types of fittings and the pipe or other components. Because of this the fittings must carry printed or embossed information about the conditions to be used, generally a voltage and a given time period. Difficulties can arise in reading this information in the field and there is the potential for transcribing errors to arise when the information is manually inputted to the electrofusion welding control unit. Furthermore, not all electrofusion welding units provide the same voltage and if the voltage specified for the fitting is different from that the unit will provide an adjustment has to be provided. Again errors can be introduced as a result.

The present invention seeks to minimise errors in the electrofusion welding process and in particular seeks to ensure the use of the correct parameters in the case of each fitting type, material and manufacture. The invention also seeks to achieve this without the need for additional and separate equipment having to be provided.

According to one embodiment of the invention, at the start of an electrofusion operation the control unit is electrically connected to the fitting to be resistance heated by leads or other connectors suitable for the application of the resistance heating current. The operator is then asked by the control unit whether he wants to perform an automated fusion or manual fusion operation.

If a manual fusion is selected the operator has the chance to input a voltage and/or current and/or time of his choice.

If an automatic fusion is selected then the operator is asked to input the category of fitting to be fused. The category refers to the general type of fitting, i.e. reducer or elbow or tapping tee etc. This information is unmistakable available to the operator from a simple visual inspection of the fitting.

The operator is then asked by the control unit to input the material type, commonly only two material types are used both formed of polyethylene, so called PE80 and PE100. This information is available to the operator from visual inspection of printed or embossed indications on the fitting

The electrofusion control unit then applies a constant current to the fitting and measures the voltage drop across the fitting to give a resistance value. The resistance is measured to three decimal places by the control unit.

The resistance value obtained is then compared with all the values stored in a database held by the control unit to see whether it corresponds with the stored range of resistance values expected for each of the different fitting types falling within that category the control unit has in its database. Any fitting types which have a stored range which matches with the measured value are displayed to the operator and a selection is invited.

In many cases a single fitting type may be the only one that matches and hence is suggested by the control unit. The operator can then verify the type prior to proceeding, if he wishes and/or proceed with the fusion operation and/or restart the procedure.

In some cases two or more fitting types will match and be suggested as possible options. In such a case, the operator may compared the options with the actual fitting to make a final choice from the limited range of options listed. The fusion operation follows the selection.

Rarely the selection process may suggest that no fittings have ranges covering the measured value. In such cases the user may be given the option to retry (perhaps checking the coupling to the fitting to ensure good electrical contact) and/or to perform a manually controlled fusion process and/or the closest fitting type or types to the measured value may be displayed for selection for automatic fusion. Where the closest fitting types are displayed in such a case an indication as to the deviation from the expected range may be provided.

As an option for the invention the database may be self updating based on the values it measures and the decisions made on the type of fitting that measurement corresponds to. Thus the range for one or more fitting types may vary over time as the particular control unit's experience grows.

In the above mentioned operation of the invention, therefore, the amount of information which has to be manually inputted is reduced, the type of information requiring selection is of a less error prone form and the operating conditions are actually automatically applied. A more accurate and reliable system is thus provided.

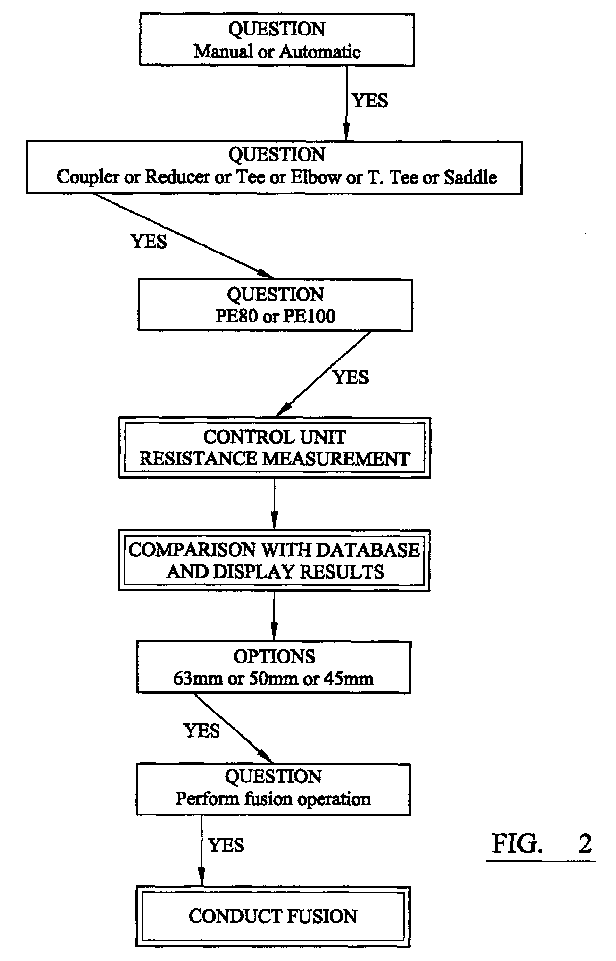

With particular reference to Figure 2 the sequence a steps in a process of this type is shown for a particular case. The operator first responds to the manual/automatic option by selecting automatic. The operator then responds to the coupler/reducer/tee/elbow/tapping tee/saddle/other options by selecting coupler. The operator then selects the material from the PE80/PE100 option by selecting PE100.

Following these inputs the resistance of the actual fitting is measured. The result is then compared with the database to give the possible options. In this case 40mm, 50mm and 63mm couplers are suggested, but with the options listed in order from the one offering highest correspondence between the measured value and the range expected for that fitting down. The operator then selects from these the actual fitting size and then authorises the fusion process to start.

In an alternative form the fitting category and material can be selected before the fitting is actually attached to the control unit, with the resistance measurement then being performed.

In a further alternative form the resistance measurement can be made and then the operator can be asked to select the category of fitting and material.

Whatever the selection process used, once the selection process has been performed the voltage and/or current and/or time of application are provided automatically by the control unit in a manner which ensures optimum joint quality.

In any of the invention's embodiments the selection options could also include the manufacturer of the fitting and the database can store expected resistance ranges for the fitting ranges of a variety of manufacturers.

The database is of course readily up-dateable to account for new fittings and/or changes to existing fittings. The selection options can also be updated to reflect the introduction of new material possibilities, new fitting categories or new manufacturers.

## Claims

1. A method of joining a first component to a second component, the method comprising the acts of selecting a first component to join to a second component, arranging the first and second component in contact with one another, connecting the first component to a power supply, applying the power supply according to a power supply profile to the first component to resistance heat at least the first component and allowing the first component to cool joined to the second component, and wherein a listing of a plurality of first component types is provided with one or more stored resistance values for each first component type, the resistance of at least a part of the selected first component being measured to obtain a measured resistance value, the measured resistance value being compared with the stored resistance values for at least some of the plurality of first component types, the comparison resulting in the selection of one or more types of first component as possible identities for the actual first component when a given degree of correspondence between the measured resistance value and a stored resistance value occurs, the possible identities being indicated and one of those identities being selected, the selection resulting in the application of the power supply profile associated with that identity for the first component.

2. A method according to claim 1 in which the first component is selected from one or more categories of first component, such as couplers, reducers, tees, tapping tees, elbows, saddles or other.

3. A method according to claim 1 or claim 2 in which one or more of the categories include two or more different size first components.

4. A method according to any preceding claim in which one or more of the categories include one or more first components of different manufacture.

5. A method according to any preceding claim in which each different manufacture and/or size and/or category of first component is considered as a different type of first component.

6. A method according any preceding claim in which some first component types have different power supply profiles associated with them to other first component types.

7. A method according to any preceding claim in which a power supply profile specifies application of a given voltage and /or voltage profile with time and/or a given current and/or current profile with time and/or a given power supply duration.

8. A method according to any preceding claim in which the listing of a plurality of first component types are provided as a database.

9. A method according to any preceding claim in which the listing for a first component type provides a single stored resistance value, a plurality of stored resistance values or a range of stored resistance values.

10. A method according to any preceding claim in which the measured resistance value of the selected first component is obtained by passing a current through the first component and measuring the voltage drop across the first component.

11. A method according to any preceding claim in which the comparison of the measured resistance value with the stored resistance values involves a determination as to whether the measured resistance value is within a given deviation from the stored resistance value or values or range of values.

12. A method according to claim 11 in which the comparison is made with respect to all first component types within a given category of first components.

13. A method according to any preceding claim in which the method requests one or more inputs or selections of the operator or operators, such as the input of the first component's category and / or the input of the first component's material of manufacture and / or the input of the first component's manufacturer.

14. A method according to any preceding claim in which where one or more possible identities with directly corresponding stored resistance value or values or range of values are found by the comparison they are each indicated.

15. A method according to any preceding claim in which where no possible identities with directly corresponding stored resistance value or values or range of values are found by the comparison, then the possible identities for which the measured resistance value is within the given deviation of the possible identity's stored resistance value or values or range of values are indicated.

16. A method according to any preceding claim in which the listing of first component types and associated stored resistance value or values or range of values is automatically updated as the method is repeated for different first components.

17. Apparatus for joining a first component to a second component, the apparatus comprising a power supply which is electrically connected to a selected first component in contact with a second component, the power supply applying power according to a power supply profile to the first component to resistance heat at least the first component and allowing the first component to cool joined to the second component, the power profile being defined by a control unit for the power supply and wherein the apparatus includes a listing of a plurality of first component types with one or more stored resistance values for each first component type, a resistance measurer for at least a part of the selected first component to obtain a measured resistance value, a comparator for the measured resistance value with the stored resistance values for at least some of the plurality of first component types, the comparator output resulting in the selection of one or more types of first component as possible identities for the actual first component when a given degree of correspondence between the measured resistance value and a stored resistance value occurs, an indicator for indicating the possible identities and a user operated selector to select one of those identities, the selection being conveyed to the control unit and resulting in the application of the power supply profile associated with that identity for the first component.
